(19) Europäisches Patentamt
European Patent Office
Office européen des brevets

(11) Numéro de publication: **0 232 655 B1**

(12) **FASCICULE DE BREVET EUROPEEN**

(45) Date de publication du fascicule du brevet: **16.08.89**

(21) Numéro de dépôt: **86402908.7**

(22) Date de dépôt: **23.12.86**

(51) Int. Cl.⁴: **C08G 73/10**, C08L 79/08, C08L 63/00, C09J 3/16, B32B 27/04

# (54) Compositions comprenant des copolyimides arylaliphatiques à enchaînements éther et des résines époxydes et leur utilisation comme adhésifs.

(30) Priorité: **24.12.85 FR 8519277**

(43) Date de publication de la demande: **19.08.87 Bulletin 87/34**

(45) Mention de la délivrance du brevet: **16.08.89 Bulletin 89/33**

(84) Etats contractants désignés: **BE CH DE GB IT LI NL**

(56) Documents cités:
**FR-A- 2 329 721**
**GB-A- 1 037 374**
**US-A- 4 346 182**

(73) Titulaire: **CENTRE D'ETUDE DES MATERIAUX ORGANIQUES POUR TECHNOLOGIES AVANCEES, Autoroute Lyon-Vienne Echangeur de Solaize Vernaison Solaize, F-69390 Vernaison(FR)**

(72) Inventeur: **Mariaggi, Paul, La Rivoire 3, F-38200 Seyssuel(FR)**
Inventeur: **Gonzalez, Serge, Résidence "Clos du Pensionnat" Bâtiment B, F-69150 Decines(FR)**
Inventeur: **Rabilloud, Guy, 27, Boulevard Clémenceau, F-38100 Grenoble(FR)**
Inventeur: **Sillion, Bernard, 93, rue Juliot Curie, F-69005 Lyon(FR)**

(74) Mandataire: **Colas des Francs, Jean et al, Institut Français du Pétrole 4, Avenue de Bois Préau, F-92502 Rueil-Malmaison(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 232 655 B1

## Description

La présente invention a pour objet de nouvelles compositions adhésives obtenues par mélange ou réaction de résines époxydes avec copolyimides arylaliphatiques à enchaînement éther. Les copolyimides, outre leur utilité comme intermédiaires dans la fabrication des compositions précitées, possèdent eux-mêmes des propriétés adhésives intéressantes. Les compositions obtenues par mélange de résines époxydes avec lesdits copolyimides à la fois thermoplastiques et thermodurcissables car les fonctions réactives des résines époxydes induisent des réactions de réticulation au moment de la mise en oeuvre de l'adhésif.

Elles présentent en outre une solubilité tout à fait exceptionelle dans de nombreux solvants organiques, une très bonne résistance à la chaleur et à l'oxydation et d'excellentes propriétés adhésives.

L'invention concerne également l'utilisation de ces compositions adhésives comme liant dans la fabrication de matériaux composites, comme revêtements isolants, et comme adhésifs pour le collage des métaux ou d'autres matériaux. Mais en raison de leur souplesse et de leur flexibilité, elles sont particulièrement bien adaptées pour fabriquer des matériaux composites souples. Ces matériaux peuvent être obtenus par collage de films de polymères organiques entre eux ou sur des feuilles métalliques minces, ou par collage de films de polymères ou de feuilles métalliques sur des tissus de fibres organiques ou minérales ou encore par collage de feuilles métalliques entre elles.

On sait que les polyimides synthétisés à partir de diamines aliphatiques tels qu'ils ont été décrits dans les brevets U.S.A. n$^o$ 2 867 609, 2 880 230 et 2 944 993 sont des polymères ayant généralement un caractère thermoplastique, mais qu'ils nécessitent pour leur mise en oeuvre des températures relativement élevées, supérieures à 250°C et souvent comprise entre 300 et 400°C. De plus, il a été montré dans le brevet U.S.A. n$^o$ 4 277 993 que, d'une façon générale, les polyimides de haute masse moléculaire ne réagissent pas avec les résines époxydes.

Il a été également montré dans le brevet français n$^o$ 2 514 772 que des compositions adhésives formées d'une résine de polybenzhydrolimide aromatique et d'une résine époxyde pouvaient être utilisées pour fabriquer des matériaux composites. Lesdites compositions ont cependant une trop grande rigidité structurale pour être utilisées dans des applications qui nécessitent un adhésif souple, flexible et élastique.

On constate également que les résines de polyimides arylaliphatiques de l'art antérieur, c'est à dire formées par la réaction d'un dérivé d'un acide aromatique tétracarboxylique avec une diamine aliphatique di-primaire, ont des propriétés thermoplastiques à haute température, mais qu'elles ne sont pas suffisamment flexibles pour certaines applications spécifiques telles que le collage de matériaux souples. Comme on le verra dans les exemples comparatifs, ces polymères ont, par rapport aux substrats souples, une trop grande rigidité qui induit des contraintes mécaniques élevées dans le matériau. De plus, leur température de thermoplasticité étant généralement supérieure à 200°C, il y a, au moment de la mise en oeuvre des produits, des déformations irréversibles des substrats avec d'importants défauts de planéité du matériau composite.

Un des objets de la présente invention est de préparer de nouvelles compositions de copolyimides arylaliphatiques ayant une température de thermoplasticité relativement basse, généralement inférieure à 200°C, et de préférence comprise entre 70 et 190°C.

Un autre objet de l'invention est de préparer des compositions adhésives par mélange d'au moins un copolyimide avec au moins une résine époxyde.

Un autre objet de l'invention concerne le produit de réaction de l'un au moins de ces copolyimides avec au moins une résine époxyde qui peut être obtenu par chauffage du mélange des réactifs à une température au moins égale à leur température de ramollissement ou de fusion, qui est par exemple comprise entre 100 et 300°C. Les résines de copolyimides à enchaînements éther de l'invention présentent en effet l'avantage d'être d'une part parfaitement compatibles avec de nombreuses résines époxydes commerciales et d'autre part d'être solubles dans de nombreux solvants organiques qui sont de bons solvants des résines époxydes. Les conditions de mise en oeuvre de ces compositions adhésives copolyimide/résine époxyde, c'est à dire la pression et la température nécessaire pour effectuer le collage des surfaces, sont exceptionnellement améliorées par rapport à ce qui est connu pour les polyimides de l'art antérieur.

On a découvert en particulier que les compositions adhésives de l'invention étaient très solubles dans un grand nombre de solvants organiques qui ne sont pas d'habitude des solvants des polyimides. Ces compositions ont également une très bonne stabilité au stockage soit sous forme de solution, soit sous forme de film adhésif. De plus, leurs propriétés de souplesse ou de rigidité peuvent être très facilement modifiées en agissant sur les constituants chimiques de la composition. Un autre avantage de ces compositions adhésives réside dans leurs conditions de mise en oeuvre qui sont pratiquement identiques à celles qui sont utilisées avec les résines époxydes.

Un autre objet de l'invention concerne l'utilisation des compositions adhésives, formées par le mélange ou le produit de réaction de résines époxydes avec les copolyimides arylaliphatiques à enchaînements éthers, pour fabriquer des matériaux composites flexibles. La fabrication de ces matériaux nécessite en effet un certain nombre de propriétés tout à fait spécifiques. Il faut, en particulier, que la couche adhésive reste souple et élastique pendant sa mise en oeuvre pour que le matériau conserve une bonne planéité. Elle doit avoir en même temps de bonnes propriétés cohésives pour éviter le glissement des substrats l'un par rapport à l'autre. Enfin dans le cas du collage des films de polymères entre eux ou sur des feuilles métalliques, il est important de ne pas avoir à effectuer de traitement chimique ou physique préalable sur les substrats pour obtenir de bonnes propriétés adhésives.

On a découvert que les compositions adhésives de l'invention présentaient sur tous ces points : solubilité, prise à température modérée, planéité du matériau, contrôle du glissement, absence de fluage, collage de supports non traités et forte adhésivité un ensemble de propriétés tout à fait remarquables. De plus, dans les applications destinées à l'électronique où la pureté ionique est un facteur très important, ces compositions ont l'avantage de donner des joints de colle qui sont très peu perméables à la reprise d'ions minéraux pendant les traitements chimiques de gravure.

L'invention a plus particulièrement pour objet des compositions de copolyimides arylaliphatiques préparées en faisant réagir au moins une diamine primaire de formule générale

$$H_2N\text{-}R\text{-}NH_2 \qquad (1)$$

et au moins une diamine primaire de formule générale

$$H_2N\text{-}R''_1\text{-}O\text{-}(\text{-}R'\text{-}O\text{-})_n\text{-}R''_2\text{-}NH_2 \qquad (2)$$

avec au moins un composé aromatique de formule générale

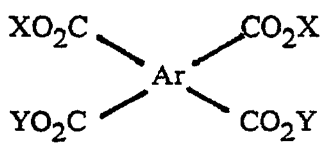

(3)

La diamine de formule (1) représentant de 90 à 30 % en mole et la diamine de formule (2) de 10 à 70 % en mole de la quantité totale des diamines.

Dans ces formules, R, R', $R''_1$ et $R''_2$ sont des radicaux organiques divalents dont les deux valences sont sur des atomes de carbone distincts dans la molécule. Le radical R peut être un reste hydrocarboné contenant de 2 à 20 atomes de carbone, constitué d'une chaîne aliphatique linéaire ou ramifiée, d'un ou de plusieurs cycles saturés ou insaturés ou encore d'une chaîne arylaliphatique. Le radical R peut, en plus des atomes de carbone et d'hydrogène contenir également des hétéroatomes comme par exemple l'oxygène, le soufre, l'azote, le phosphore ou le silicium.

Lorsque le radical R est un radical aromatique divalent carbocyclique ou hétérocyclique, il peut être formé d'un cycle ou de plusieurs cycles qui sont alors accolés ou reliés entre eux. Lorsque le radical R comporte plusieurs cycles reliés entre eux, les éléments de liaison sont par exemple la liaison simple ou l'un des atomes et groupements suivants :

$$\text{-O-, -S-, -SO-, -}SO_2\text{-, -}CH_2\text{-, -}CF_2\text{-, -}C(CH_3)_2\text{-, -}C(CF_3)_2\text{-, -CO-, -CHOH-,}$$
$$\text{-COO-, -CONH-, -}Si(CH_3)_2\text{-, -}Si(CH_3)_2\text{-O-}Si(CH_3)_2\text{-.}$$

n peut être zéro ou un nombre entier, par exemple de 1 à 100.

Le radical Ar est un radical aromatique tétravalent carbocyclique ou hétérocyclique, dont les quatre valances sont sur des atomes de carbone distincts situés deux par deux en position ortho l'un par rapport à l'autre. Le radical Ar peut être formé d'un cycle ou de plusieurs cycles qui sont alors accolés ou reliés entre eux. Lorsque le radical Ar comporte plusieurs cycles reliés entre eux, les éléments de liaison sont par exemple la liaison simple ou l'un des atomes et groupements définis précédemment pour le radical R.

X et Y, identiques ou différents, peuvent être des radicaux monovalents d'hydrocarbures renfermant de préférence chacun de 1 à 13 atomes de carbone, par exemple alcoyles inférieurs contenant de 1 à 13 atomes de carbone, cycloalcoyles ou aryles renfermant de 6 à 13 atomes de carbone. Dans ce cas, les composés de formule (3) sont des tétraesters d'acides aromatiques tétracarboxyliques. Le radical X peut également représenter un atome d'hydrogène, Y étant défini comme ci-dessus, et les composés de formule (3) représentent alors des bis(ortho-acide-esters) d'acides aromatiques tétracarboxyliques. Les radicaux X et Y peuvent également être tous deux des atomes d'hydrogène et dans ce cas les composés de formule (3) représentent des acides aromatiques tétracarboxyliques.

Parmi les diamines primaires de formule générale (1) qui conviennent pour la présente invention, on peut citer le 1,3-diaminopropane, le 1,4-diaminobutane, le 1,3-diamino 2,2-diméthyl propane, le 1,3-diamino 1,1,3-triméthyl propane, le 1,5-diamino pentane, le 1,5-diamino 3,3-diméthyl pentane, le 1,6-diaminohexane, le 1,6-diamino 3-méthyl hexane, le 1,6-diamino 2,5-diméthyl hexane, les 2,2,4- et 2,4,4-triméthylhexaméthylènediamines ou le mélange de ces deux isomères, les 1,1,6,6- et 2,2,5,5-tétraméthylhexaméthylènediamines, le ter-butyl hexaméthylène diamine, le 1,7-diaminoheptane, le 1,7-diamino 3-méthylheptane, les 2,5-et 4,4-diméthylheptaméthylènediamines, le 1,8-diaminooctane, le 1,9-diaminononane, le 1,9-diamino 5-méthyl nonane, le 1,10-diaminodécane, le 1,11-diaminoundécane, les 1,12- et 2,11-diaminododécanes, le 2,17-diaminoeicosadécane, le bis(3-aminopropyl) sulfure, les 1,3- et 1,4-diaminocyclohexanes, le bis(4-aminocyclohexyl)méthane, les méta et para-xylylènediamines, l'isophoronediamine, les 1,3- et 1,4-diaminobenzènes, les 3,3'- et 4,4'-diamino diphénylméthanes, les 3,3'- et 4,4'-diamino diphényl éthers, les 3,3'- et 4,4'-diamino diphényl sulfures, les 3,3'- et 4,4'-diamino diphényl sulfones, la benzidine, la 3,3'-diméthylbenzidine, les 3,3'- et 4,4'-diamino benzophénones et les 3,3'- et 4,4'-diamino benzhydrols.

Parmi les diamines primaires de formule générale (2) qui conviennent pour la présente invention on peut citer le bis(3-aminopropyl) éther, le 1,2-bis(3-aminopropoxy) éthane, le 1,12-diamino 4,9-dioxadodécane, le 1,13-diamino 4,7,10-trioxatridécane, les bis(3-aminopropyl) polyoxytétraméthylène de masse moléculaire moyenne comprise entre 350 et 2500, le 1,3-bis(4-aminophénoxy) propane, les bis(3-aminopropyl) polyoxyéthylène de masse moléculaire moyenne comprise entre 300 et 3000, les bis(3-aminopropyl) copolyoxyéthylène-oxypropylène de masse moléculaire moyenne comprise entre 300 et 3000 et tous les polyéthers terminés par des groupes amines primaires dont la masse moléculaire moyenne est comprise entre 250 et 3000.

Parmi les composés de formule (3) on peut citer les acides aromatiques tétracarboxyliques, leurs tétraesters symétriques, comme les esters de tétraméthyle, de tétraéthyle, de tétraisopropyle et de tétraphényle, leurs tétraesters dissymétriques comme les esters de diméthyle diphényle, de diéthyle diphényle, de diméthyle dibutyle, leurs bis(ortho-acides esters), appelés plus simplement diesters, comme par exemple le diester de méthyle, le diester d'éthyle, le diester de n-propyle, le diester d'isopropyle, le diester de n-butyle, le diester d'isobutyle, le diester d'amyle, le diester d'hexyle, le diester de phényle, le diester de 2-hydroxyéthyle. le diester de trifluoroéthyle et le diester d'éthoxycarbonylméthyle.

Parmi les acides tétracarboxyliques et leurs dérivés qui conviennent pour la présente invention, on peut citer l'acide benzène 1,2,4,5-tétracarboxylique, l'acide biphényl 3,3',4,4'-tétracarboxylique, l'acide benzophénone 3,3',4,4'-tétracarboxylique, l'acide benzhydrol 3,3',4,4'-tétracarboxylique, l'acide diphénylsulfure 3,3',4,4'-tétracar boxylique, l'acide diphénylsulfone 3,3'4,4'-tétracarboxylique, l'acide diphényléther 3,3',4,4'-tétracarboxylique, l'acide diphénylméthane 3,3',4,4'-tetracarboxylique et le 2,3-bis(3,4-dicarboxyphényl) 1,1,1,3,3,3-hexafluoropropane. On préfère les acides ou les esters des acides benzhydrol et benzophénone tétracarboxyliques.

Dans le mode de mise en oeuvre préféré de l'invention, on prépare une composition adhésive constituée principalement d'une résine de copolyimide en dissolvant dans un solvant approprié une ou plusieurs diamines de formule (1) et une ou plusieurs diamines de formule (2), avec une quantité de préférence sensiblement équimoléculaire d'au moins un composé aromatique de formule (3).

Ce sont naturellement les proportions stoechiométriques, comme dans toutes réaction de polycondensation, qui donnent les polymères de plus haute masse moléculaire, mais pour certaines applications, il est possible d'employer un excès de l'un ou l'autre des monomères. Toutefois, il est préférable que l'écart par rapport aux proportions stoechiométriques soit inférieur à 25% et de préférence compris entre 0 et 15% en mole. Les proportions stoechiométriques correspondent à un nombre égal de fonctions réactives antagonistes, ces fonctions étant les groupes amines primaires provenant des composés de formules générales (1) et (2) et les groupes ortho diacides ou diesters ou acide-ester fournis par les composés de formule générale (3).

Les solvants préférés avec lesquels on prépare les compositions de copolyimides de l'invention sont des composés organiques polaires, c'est à dire renfermant un hétéroatome tel que que l'oxygène, l'azote, le soufre, le phosphore ou le chlore, inertes vis à vis de monomères et des polymères. Parmi ces solvants on peut citer les phénols comme le phénol, les crésols, les xylénols, les chloro phénols; les mono ou diéthers de glycols comme par exemple ceux de l'éthylèneglycol et du diéthylèneglycol, les mono et diesters de glycols, comme par exemple ceux de l'éthylèneglycol, les mono et diesters de glycols, comme par exemple ceux de l'éthylèneglycol et du diéthylèneglycol; les amides comme par exemple le méthylformamide, le diméthylformamide, le diméthylacétamide, le méthylacétamide, l'hexaméthylphosphotriamide; les urées, comme par exemple la tétraméthylurée; les composés hétérocycliques; comme par exemple la pyridine, la quinoléine, le dioxanne, le tétrahydrofuranne, la N-méthylpyrrolidone, la N- acétylpyrrolidone, la N-cyclohexyl pyrrolidone, la tétraméthylènesulfone; les sulfones et sulfoxydes, comme par exemple le diméthylsulfone et le diméthylsulfoxyde.

Ces solvants peuvent être utilisés seuls ou mélangés entre eux, ou encore en mélange avec d'autres composés organiques liquides parmi lesquels on peut citer les alcools, tels que le méthanol, l'éthanol, le propanol, l'isopropanol, les butanols, l'alcool benzylique; les cétones, comme par exemple l'acétone, la 2-butanone, la méthylisobutyl cétone, la diisopropyl cétone, la cyclohexanone, l'acétophénone; les hydrocarbures aromatiques, comme le benzène, le toluène, les xylènes, le solvant naphta; les hydrocarbures halogénés, tels que le chlorobenzène, les dichlorobenzénes, les chlorotoluènes; les esters aliphatiques et aromatiques des acides carboxyliques aliphatiques et aromatiques, comme par exemple les acétates de méthyle, d'éthyle, d'isopropyle, de butyle, de phényle, les benzoates de méthyle et de phényle; des éthers, comme l'éther de dibutyle ou de diphényle.

La concentration initiale des monomères dans le solvant de réaction n'est pas critique mais elle est généralement comprise entre 10 et 80% en poids. En fin de réaction, la concentration de la composition résineuse est ajustée à une valeur telle que la solution ait une viscosité dynamique bien adaptée à l'utilisation

envisagée. En d'autres termes, la concentration final dépend de la masse moléculaire du polymère, de la nature du ou des solvants et de la température de mise en oeuvre.

Pour les applications où il est nécessaire de modifier soit la composition des solvants, soit la composition finale des produits, il est préférable de précipiter les compositions de copolyimides de l'invention dans un milieu liquide qui est un non-solvant des polymères mais de préférence miscible au solvant de polymérisation, comme par exemple l'eau, les solutions hydroalcooliques, certaines cétones, certains éthers, certains hydrocarbures aliphatiques.

La température de la réaction de polycondensation peut varier dans un très large domaine, entre 80 et 400°C. Elle est généralement fixée à une valeur telle que la réaction des fonctions amines sur les groupes fonctionnels acides ou esters s'effectue à une vitesse raisonnable. Selon le solvant et les réactifs utilisés, une température comprise entre 100 et 250°C donne généralement de bons résultats. Les produits volatils, eau et/ou alcools, formés en cours de réaction, peuvent être laissés dans le milieu, mais ils peuvent également être éliminés par distillation au fur et à mesure de leur formation ce qui permet de controler l'avancement de la réaction.

L'avancement d'une réaction de polycondensation est par définition le rapport entre le nombre de groupes fonctionnels ayant réagi et le nombre initial de ces mêmes groupes. Il peut être défini en pourcentage, et à un avancement de par exemple 50%, correspond la disparition de la moitié des fonctions réactives, ou en taux de réaction (p), tel que p soit compris entre 0 et 1. Dans ce cas, un avancement de 50% a pour équivalent un taux de réaction de 0,5. Par définition, le degré de polycondensation ou DP est donné par la relation 1/1-p.

Lors de la polycondensation, on peut mettre simultanément en réaction les deux amines de formules (1) et (2) ou les introduire successivement.

Les compositions de copolyimides arylaliphatiques de l'invention présentent une solubilité particulièrement élevée dans de nombreux solvants organiques. Par conséquent, il est possible de suivre aisément la formation des polymères par les techniques usuelles d'analyse. L'avancement de la réaction peut être déterminé simplement en mesurant la quantité de produits volatils qui distillent en cours de réaction. On peut également utiliser avantageusement le dosage des fonctions amines, acides et/ou esters qui constituent les fins de chaînes. La solubilité des polymères permet également d'employer toutes les méthodes d'analyse spectroscopiques (infrarouge, ultraviolet, résonance magnétique nucléaire) pour étudier la structure des polymères.

Le procédée de préparation des compositions de copolyimides permet de connaître par le poids de distillat (eau et/ou alcool) l'avancement de la réaction. Mais de plus, dans le cas par exemple des diesters d'alkyle des acides tétracarboxyliques, la composition du distillat donne des informations sur le taux de cyclisation en imide. En effet, la réaction d'une fonction amine sur un groupe acide-ester engendre un équivalent moléculaire d'eau et un équivalent moléculaire d'alcool chaque fois qu'il y a formation d'un cycle imide. On a ainsi observé que les compositions de l'invention ont un taux d'imidation toujours supérieur à 90% et généralement compris entre 95 et 99,9%. Ce qui signifie que, par exemple, 95 à 99,9% des fonctions amines ayant réagi sont engagées dans des cycles imides, le reste étant vraisemblablement sous forme l'amide-acide et/ou d'amide-ester.

Les compositions de l'invention sont préparées à divers degrés d'avancement, par exemple de 50 à 99,9%, en fonction de l'usage auquel elles sont destinées. Pour la plupart des applications, il est cependant préférable de prolonger la réaction jusqu'à ce que son avancement soit compris entre 90 et 99,9%, de façon à éliminer la plus grande partie des composés volatils avant la mise en oeuvre des polymères. Un taux de conversion élevé présente en outre l'avantage de ne laisser dans le milieu que des quantités pondérales extrêmement faibles des monomères de départ.

Les compositions de copolyimides, telles que définies ci-dessus, peuvent éventuellement être utilisées directement sous cette forme pour un certain nombre d'applications. Mais selon la présente invention on les utilise en mélange ou en combinaison avec les résines époxydes dès lors que l'application envisagée nécessite l'emploi d'un adhésif thermoplastique réticulable à température modérée par exemple de 50 à 250°C, de préférence de 100 à 200°C. Pour cette utilisation, on préfère les copolyimides de viscosité inhérente 0,2 à 0,8 dl/g, mesurée à 30°C pour une concentration de 5 g de polymère par litre de N-méthyl pyrrolidone.

Par résine époxyde en entend tout composé possédant plus de un groupe époxyde par molécule. Parmi les résines époxydes qui peuvent être employées dans la présente invention, on peut citer les résines préparées par réaction de l'épichlorhydrine ou de la dichlorhydrine du glycérol avec les acides polycarboxyliques, les polyols, les polyphénols, les aminophénols, les amines ou divers composés hétérocycliques.

Parmi les esters glycidiques, on peut citer les esters dérivés d'acides polycarboxyliques aliphatiques comme les acides oxalique, succinique, glutarique, adipique, pimélique, subérique, azélaïque, sébacique ou linoléique; les esters dérivés d'acides polycarboxyliques cycloaliphatiques comme les acides tétrahydrophtalique, méthyl tétrahydrophtalique, hexahydrophtalique, méthyl hexahydrophtalique, nadique, méthyl nadique; les esters dérivés d'acides aromatiques polycarboxyliques comme par exemple, les acides phtalique, isophtalique, téréphtalique ou trimellitique.

Parmi les éthers glycidiques, on peut citer les éthers dérivés des polyols comme l'éthylène glycol, les di- et triéthylène glycols, les polyoxyéthylène glycols supérieurs, les 1,2- et 1,3-propanediols, les poly-

oxypropylène glycols, le 1,4-butanediol, les polyoxybutylène glycols, le 1,5-pentanediol, le 1,6-hexanediol, le glycérol, le 1,1,1-triméthylolpropane, le néopentyl glycol, le pentaérythritol; les éthers dérivés des polyols cycloaliphatiques comme le résorcitol, le quinitol, le bis(4-hydroxycyclohexyl) méthane, le 2,2-bis(4-hydroxycyclohexyl) propane et les éthers dérivés de polyphénols comme le résorcinol, l'hydroquinone, le bis(4-hydroxyphényl) méthane, le 2,2-bis(4-hydroxyphényl) propane, la bis(4-hydroxyphényl) sulfone, le 1,1,2,2-tétrakis(4-hydroxyphényl) éthane, le 2,2-bis(3,5-dibromo 4-hydroxyphényl) propane et les résines novolaques formées à partir de la réaction de condensation des aldéhydes de des cétones avec les phénols.

Parmi les glycidylamines, on peut citer celles qui sont formées à partir de l'aniline, de la butylamine, du bis(4-aminophényl) méthane, des 1,3- et 1,4-diaminobenzènes, des méta et para-xylylènediamines et des méta et para-amino phénols.

En plus de ces composés glycidiques, on peut utiliser les résines époxydes préparées par époxydation de composés comportant une ou plusieurs doubles liaisons éthyléniques comme par exemple, le vinyl cyclohéxène, le dicyclopentadiène, le cyclohexadiène, l'isoprène, le butadiène, le divinyl benzène, les esters dérivés d'acides insaturés comme l'acide cyclohéxène carboxylique et d'une façon générale les résines connues sous le nom de résines cycloaliphatiques.

Pour coller deux substrats entre eux, on applique une couche d'un mélange de copolyimide et de résine époxyde entre les deux substrats et on maintient le contact en chauffant à une température de 50 à 250°C, de préférence de 100 à 200°C. Pour cent parties en poids de copolyimides, on utilise avantageusement de 1 à 30 parties en poids de résine époxyde. Bien que le mécanisme de la réaction ne soit pas totalement éclairci, on pense que les groupes époxydes réagissent avec les groupes réactionnels de départ qui n'ont pas réagi ou avec des groupes amides formés intermédiairement entre le composé acide et la diamine primaire. Ces groupes sont pratiquement toujours présents, au moins en faible proportion, même lorsque l'on a utilisé des proportions stoechiométriques de réactifs pour former le copolyimide.

L'invention sera décrite de façon plus précise en liaison avec les exemples spécifiques ci-après dans lesquels les détails sont donnés à titre illustratif et non limitatif. Dans ces exemples, les réactions de polycondensation sont effectuées sous agitation et en atmosphère inerte pour éviter l'oxydation des fonctions amines. Les viscosités inhérentes, lorsqu'on les donne, sont mesurées à 30°C pour une concentration de 5 g de polymère par litre de N-méthyl pyrrolidone.

La température de ramollissement des polymères, lorsqu'elle est indiquée, est mesurée au banc de fusion de Kofler en étendant le polymère sur toute la longueur du banc. Après environ 1,5 minute, le polymère est balayé avec un pinceau et la zone thermique d'accrochage sur le banc sert de référence comme température de ramollissement.

La présence des enchaînements imides cycliques dans les polymères solubles obtenus lorsqu'on opère comme décrit dans les exemples selon l'invention a été déterminée par les méthodes d'analyse classiques : analyse élémentaire, réaction avec l'hydrate d'hydrazine et la soude, spectographie dans l'infrarouge et l'ultraviolet, résonance magnétique nucléaire du proton et du carbone et analyses thermiques.

Les résines époxydes citées plus particulièrement dans les exemples sont :

- Les résines Epon 827 et Epon 1001 (marque déposée de la société Shell) qui sont des diglycidyléthers du bisphénol-A ayant respectivement un poids d'équivalent époxyde de 190 et 450 g.
- La résine époxynovolaque DEN 438 (marque déposée de Dow Chemical Company).
- Le 1-(N,N-bis(1,2-époxypropyl) amino) 4-(1,2-époxypropyloxy) benzène ou N,N,O-triglycidyl para-aminophénol (TGAP).
- Le bis(N,N-bis(1,2-époxypropyl) 4-aminophényl) méthane ou N,N,N',N'-tétraglycidyl méthylène dianiline (TGMDA).

Les substrats utilisés pour fabriquer les matériaux cités à titre d'exemples sont les suivants.

- Films non traités de polyimide Kapton (marque déposée de DuPont de Nemours) en épaisseurs de 50, 100 et 150 micromètres.
- Feuille de cuivre électrodéposé ou laminé et oxydé sur une face de 50 à 100 micromètres d'épaisseur.
- Feuille d'aluminium de 50 à 100 micromètres d'épaisseur.
- Eprouvettes en alliage d'aluminium 2024 T3.
- Tissus de verre E 1581 traité avec un apprêt à l'aminopropyl triéthoxy silane et pesant environ 300 g/m².

Les valeurs de résistance mécanique des matériaux, lorsqu'elles sont données, ont été mesurées avec une machine universelle d'essais Instron 1175 (marque déposée) equipée pour la détermination de la contrainte de rupture en traction-cisaillement, de la résistance à la flexion et de la résistance au pelage sur roue allemande avec un angle de traction de 90°.

Les exemples 1 à 4 sont donnés à titre comparatif. Dans ces exemples, des résines de polyimides sont synthétisées en utilisant séparément soit une diamine de formule générale (1), soit une diamine de formule générale (2). Ces résines contiennent donc chacune l'un des éléments constituant la structure de base des copolyimides arylaliphatiques de l'invention.

Les compositions adhésives préparées à partir des résines de polyimides des exemples 1 à 4 et d'une résine époxyde sont décrites dans les exemples comparatifs 22 à 25. Dans les exemples 46 à 49 et dans l'exemple 55 qui sont également donnés à titre comparatif, les polymères synthéthisés dans les exemples 1 à 4 sont utilisés comme adhésifs pour fabriquer des matériaux composites. Les autres exemples illustrent divers modes de mise en oeuvre de l'invention.

## PREPARATION DE POLYIMIDES

Exemple 1 (comparatif)

Un mélange de 466 g (1,2 mole) de diester de méthyle de l'acide benzhydrol 3,3',4,4'-tétracarboxylique, 189,95 g (1,2 mole) d'un mélange commercial de 2,2,4-triméthyl et 2,4,4-triméthylhexaméthylènediamine et 607 g de N-méthyl pyrrolidone est chauffé d'abord à 160°C, puis à 180°C et enfin à 200°C. La durée de la réaction est de 30 minutes aux deux premières températures et d'une heure à la fin. A chaque étape, une partie de la solution est précipitée et lavée dans l'eau pour donner trois résines de polyimides dont les viscosités inhérentes sont respectivement de 0,21, 0,37 et 0,88 dl/g avec, pour chacune d'elle, une température de ramollissement proche de 190°C.

La précipitation du polymère dans l'eau est effectuée à l'aide d'un broyeur à couteaux tournant à très grande vitesse. Le polymère solide est lavé et broyé trois fois de suite dans de l'eau distillée. Après filtration, il est séché à poids constant, sous pression réduite, dans une étuve chauffée à 100-110°C.

L'analyse thermogravimétrique montre que ce polymère a une température de décomposition supérieure à 300°C. De plus, lorsqu'il est chauffé à l'air pendant 500 heures à 200°C, la perte de poids est inférieure à 2%.

Exemples 2 à 4 (comparatifs)

On prépare une série de compositions de polyimides en faisant réagir pendant 1 heure à 200°C le diester de méthyle de l'acide benzhydrol 3,3',4,4'-tétracarboxylique et trois bis(3-aminopropyl) polyoxytétraméthylènes differents, en solution chacune dans 30 g de N-méthyl pyrrolidone avec les proportions de réactifs indiquées dans le tableau 1.

Tableau 1

| Exemple N° | Diester (Moles) | Diamine[a)] (Moles) | Viscosité inhérente | Tr[b)] (°C) |
|---|---|---|---|---|
| 2 | 0,081 | 0,08 | 0,27 | 65 |
| 3 | 0,0707 | 0,066 | 0,20 | 50 |
| 4 | 0,05 | 0,05 | 0,38 | 20 |

(a) La masse moléculaire moyenne en nombre de ces diamines est d'environ 860, 1250 et 2150 respectivement pour les exemples 2, 3 et 4.
(b) Température de ramollissement.

(a) La masse moléculaire moyenne en nombre de ces diamines est d'environ 860, 1250 et 2150 respectivement pour les exemples 2, 3 et 4.
(b) Température de ramollissement.

Exemples 5 à 7

Un mélange constitué de diester de méthyle de l'acide benzhydrol 3,3',4,4'-tétracarboxylique (38,83 g; 0,1 mole) de la quantité molaire d'un mélange commercial de 2,2,4-triméthyl et 2,4,4-triméthylhexaméthylènediamine indiquée dans le tableau 2 (Diamine 1) et de 50 à 70 g de N-méthyl pyrrolidone est chauffé en 10 minutes à 100-110°C, puis laissé à cette température pendant une quinzaine de minutes. Après refroidissement à la température ambiante, la quantité molaire de bis (3-aminopropyl) polyoxytétraméthylène de masse moléculaire 860 indiquée dans le tableau 2 (Diamine 2) est ajoutée au mélange réactionnel. L'ensemble est alors chauffé pendant 30 mintues à 160°C, 2 heures à 180°C et 1 heure à 200°C.

Une partie de la solution est précipitée dans l'eau et traitée comme indiqué dans l'exemple 1.

Tableau 2

| Exemple N° | Diamine 1 (Moles) | Diamine 2 (Moles) | Viscosité inhérente |
|---|---|---|---|
| 5 | 0,08 | 0,02 | 0,35 |
| 6 | 0,07 | 0,03 | 0,295 |
| 7 | 0,06 | 0,04 | 0,52 |

Ces résines ont une température de ramollissement qui varie de 90 à 125°C et une stabilité thermique identique à celle du polymère de l'exemple 1.

Exemples 8 à 10

Dans ces exemples, le solvant, le diester et la diamine 1 sont les mêmes produits que dans les exemples 5 à 7 mais la diamine 2 est un bis(3-aminopropyl) polyoxytétraméthylène de masse moléculaire moyenne égale à 1250. La composition des mélanges réactionnels et la viscosité inhérente des copolymères sont données dans le tableau 3.

Tableau 3

| Exemple N° | Diamine 1 (Moles) | Diamine 2 (Moles) | Viscosité inhérente |
|---|---|---|---|
| 8 | 0,09 | 0,01 | 0,43 |
| 9 | 0,08 | 0,02 | 0,39 |
| 10 | 0,07 | 0,03 | 0,35 |

Ces résines ont une température de ramollissement qui varie entre 80 et 110°C et une excellente stabilité thermique.

Exemple 11

Un mélange de diester de méthyle de l'acide benzhydrol 3,3',4,4'-tétracarboxylique (38,83 g; 0,1 mole), de 1,13-diamino 4,7,10-trioxatridécane (17,62 g; 0,08 mole) et de N-méthyl pyrrolidione (42 g) est chauffé à 160°C pendant 1,5 heure.
Après addition de 3,01 g (0,015 mole) de 1,12-diamino dodécane, la solution est chauffée pendant 30 minutes à 160°C, 30 minutes à 180°C et 45 minutes à 200°C.
Le copolymère précipité dans l'eau a une viscosité inhérente de 0,43 dl/g et une température de ramollissement de 122°C.

Exemple 12

Un mélange de 180 g de dianhydride de l'acide benzophénone 3,3',4,4'-tétracarboxlique (BTDA), de 40 g de méthanol anhydre et de 100 g de N-méthyl pyrrolidone (NMP) est chauffé pendant une heure à 60°C pour préparer le diester de méthyle correspondant.
Après refroidissement, on ajoute 67 g de triméthyl hexaméthylènediamine (TMHMDA) (mélange des isomères 2,2,4 et 2,4,4), 91,8 g de bis(3-aminopropyl) polyoxytétraméthylène de masse moléculaire moyenne égale à 860 et 100 g de N-méthyl pyrrolidone. La réaction de polycondensation est effectuée pendant 30 minutes à 160°C, 2 heures à 180°C et 1 heure à 200°C.
La composition de polyimide obtenue par précipitation dans l'eau a une viscosité inhérente de 0,33 dl/g et une température de ramollissement de 135°C.

Exemples 13 et 14

Deux compositions de copolyimides sont préparées dans les conditions expérimentales de l'exemple 12 en utilisant le même dianhydride (BTDA), le méthanol, la N-méthyl pyrrolidone (NMP), la triméthyl hexaméthylène diamine (TMHMDA) et un bis(3-aminopropyl) polyoxytétramèthylène de masse moléculaire moyenne égale à 1250.
Les poids en grammes de réactifs et les caractéristiques des copolyimides sont indiquées dans le tableau 4.

Tableau 4

| Composés chimiques | Exemple 13 | Exemple 14 |
|---|---|---|
| Dianhydride (BTDA) | 345 | 220 |
| Méthanol | 75 | 40 |
| Solvant (NMP) | 416 | 210 |
| Diamine 1 (TMHMDA) | 127 | 93 |
| Diamine 2 (polyéther) | 225 | 73,7 |
| Viscosité inhérente (dl/g) | 0,27 | 0,31 |
| Température de ramollissement (°C) | 115 | 130 |

Exemples 15 et 16

Deux compositions de copolyimides arylaliphatiques sont préparées en faisant réagir pendant 30 minutes à 160°C, 2 heures à 180°C et 1 heure à 200°C un mélange constitué de diester de méthyle de l'acide benzhydrol 3,3',4,4'-tétracarboxylique (BHTDE), de bis(4-aminophényl) méthane (MDA : Diamine 1), de N-méthyl pyrrolidone et de bis(3-aminopropyl) polyoxytétraméthylène de masse moléculaire 1250 (Diamine 2) dont les quantités en grammes sont données dans le tableau 5

Tableau 5

| Composés chimiques | Exemple 15 | Exemple 16 |
|---|---|---|
| Diester (BHTDE) | 260 | 360 |
| Solvant (NMP) | 117 | 120 |
| Diamine 1 (MDA) | 88 | 100 |
| Diamine 2 (polyéther) | 210 | 398 |
| Viscosité inhérente (dl/g) | 0,37 | 0,38 |
| Température de ramollissement (°C) | 245 | 190 |

Exemple 17

En suivant le protocole de l'exemple 5, on fait réagir de méthyle de l'acide benzhydrol 3,3',4,4'-tétracarboxylique (194,165 g; 0,7 mole), la triméthyl hexaméthylènediamine (111,23 g; 0,7 mole), le diester de méthyle de l'acide benzophénone 3,3',4,4'-tétracarboxylique (193,15 g; 0,5 mole) et 375 g (0,3 mole) de bis (3-aminopropyl) polyoxytétraméthylène de masse moléculaire moyenne égale à 1250 dans 750 g de N-méthyl pyrrolidone.

Une partie de la solution est précipitée dans l'eau pour donner un copolymère ayant une viscosité inhérente de 0,62 dl/g et une température de ramollissement de 145°C.

Example 18

Une composition de copolyimide est préparée en faisant réagir 303 g de diester de méthyle de l'acide benzène 1,2,4,5-tétracarboxylique et 225 g de bis(3-aminopropyl) polyoxytétraméthylène de masse moléculaire 1250 dans 260 g de N-méthyl pyrrolidone pendant 30 minutes à 160°C et une heure à 180°C. Après addition de 126,8 g de triméthyl hexaméthylènediamine, le chauffage est poursuivi pendant 30 minutes à 160°C, une heure à 180°C et une heure à 200°C. Le copolymère précipité dans l'eau a une viscosité inhérente de 0,22 dl/g et une température de ramollissement de 165°C.

Exemple 19

On prépare une composition de copolyimide en faisant réagir à 180°C pendant 2 heures le diester de méthyle de l'acide benzhydrol 3,3',4,4'-tétracarboxylique (31,07 g; 0,08 mole), l'acide benzhydrol tétracarboxylique (7,205 g; 0,02 mole), le bis (4-aminophényl) méthane (3,96 g; 0,02 mole) et un diamino-poly-

oxypropylène de masse moléculaire 990 (77,2 g; 0,078 mole) en solution dans 70 g de m-crésol.

Après un chauffage supplémentaire à 200°C pendant 1 heure, le copolymère est isolé par précipitation dans le méthanol. Il a une viscosité inhérente de 0,36 dl/g et une température de ramollissement de 148°C.

Exemple 20

On prépare une composition de copolyimide en faisant réagir pendant 4 heures à 200°C dans 80 g de méta crésol un mélange d'acide benzhydrol 3,3,',4,4'- tétracarboxylique (36 g; 0,1 mole), de 5-amino 1,3,3-triméthyl 1-aminométhyl cyclohexane (8,52 g; 0,05 mole), de 1,12-diamino 4,9-dioxadodécane (6,13 g; 0,03 mole) et 10,44 g (0,018 mole) de diamino copolyoxyéthylène-oxypropylène ayant une masse moléculaire moyenne de 580.

A la fin de la réaction, le polymère est précipité dans du méthanol, lavé trois fois avec du méthanol à ébullition et séché à 100°C sous vide pendant 24 heures. Sa viscosité inhérente est de 0,7 dl/g.

Exemple 21

On fait réagir un mélange de 42 g (0,1 mole) de tétraester de méthyle de l'acide benzhydrol 3,3',4,4'-tétracarboxylique, 6,31 g (0,03 mole) de bis(4-aminocyclohexyl) méthane, 4,09 g (0,02 mole) de 1,12-diamino 4,9-dioxadodécane et 32,5 g (0,05 mole) de diamino polyoxybutylène ayant une masse moléculaire moyenne de 650 dans 50 g de N-cyclohexyl pyrrolidone à 200°C pendant 5 heures pour préparer une composition de copolyimides ayant une viscosité inhérente de 0,46 dl/g.

**PREPARATION DE COMPOSITIONS ADHESIVES**

Exemple 22 (comparatif)

On prépare une composition adhésive en dissolvant 148,5 g de résine de polyimide de l'exemple 1 et 16,5 g de résine époxyde (Epon 827) dans 264 g de dioxanne. Le mélange est ensuite dilué avec 396 g d'acétone de façon à avoir une concentration en matière sèche proche de 20% en poids.

La viscosité dynamique de cette solution est de 330 mPa.s.

Exemples 23 à 25 (comparatifs)

Trois compositions adhésives sont préparées en dissolvant 20 g de chacun des polymères préparées dans les exemples 2 à 4 et 2g de résine époxyde (Epon 827) dans 80 g d'un mélange constitué de 70% en poids de dichlorométhane, 10% de 2-butanone, 10% de xylène et 10% d'hexane.

Exemples 26 et 27

Deux compositions adhésives sont préparées à partir des copolymères des exemples 6 et 7 en utilisant les proportions pondérales de réactifs et de solvant indiquées ci-après.

| | Exemple 26 | Exemple 27 |
|---|---|---|
| Résine de l'exemple 6 | 100 | |
| Résine de l'exemple 7 | | 100 |
| Résine époxyde (Epon 827) | 11 | 10 |
| Epoxystéarate d'octyle | 10 | |
| 2-Tétrahydrofuranone | 20 | 20 |
| Dichlorométhane | 250 | 260 |
| Xylène | 30 | 100 |
| Hexane | 10 | 30 |

Ces compositions adhésives peuvent être conservées à la température ambiante avant utilisation pendant plusieurs semaines sans que l'on puisse observer des réactions de gélification ou une variation de leur viscosité dynamique.

Exemples 28 et 29

Deux compositions adhésives sont préparées à partir des copolymères des exemples 9 et 10 en utilisant les proportions pondérales suivantes.

| | Exemple 28 | Exemple 29 |
|---|---|---|
| Résine de l'exemple 9 | 165,4 | |
| Résine de l'exemple 10 | | 50 |
| Résine époxyde (Epon 827) | 18,9 | 2 |
| Epoxystéarate d'octyle | 16,6 | |
| 2-Tétrahydrofuranone | 33,1 | |
| Dichlorométhane | 430 | |
| Xylène | 165,4 | |
| Hexane | 49,6 | |
| Tétrahydrofuranne | | 150 |

Ces compositions adhésives peuvent être conservées à la température ambiante avant utilisation pendant plusieurs semaines sans que l'on puisse observer des réactions de gélification ou une variation de leur viscosité dynamique.

Exemple 30

On prépare une composition adhésive en dissolvant 100 g de résine de copolyimide de l'exemple 12 et 3 g de résine époxyde (époxy-novolaque DEN 438) dans un mélange de dichlorméthane (260 g), de tétrahydrofuranone (20 g), de xylène (100 g) et d'hexane (30 g).

Exemples 31 et 32

Deux compositions adhésives sont préparées à partir des copolymères des exemples 13 et 14 en utilisant les proportions pondérales suivantes.

| | Exemple 31 | Exemple 32 |
|---|---|---|
| Résine de l'exemple 13 | 200 | |
| Résine de l'exemple 14 | | 202 |
| Résine époxyde (TGAP) | 2,5 | 2,5 |
| Dichlorométhane | 520 | 464 |
| Xylène | 200 | 201,6 |
| Hexane | | 123 |
| Méthanol | 5 | |

Ces compositions adhésives peuvent être conservées à la température ambiante avant utilisation pendant 1 à 2 semaines sans que l'on puisse observer des réactions de gélification ou une variation de leur viscosité dynamique.

Exemples 33 et 34

Deux compositions adhésives sont préparées à partir des copolymères des exemples 15 et 16 en utilisant les proportions pondérales suivantes.

| | Exemple 33 | Exemple 34 |
|---|---|---|
| Résine de l'exemple 15 | 50 | |
| Résine de l'exemple 16 | | 50 |
| Résine époxyde (TGMDA) | 2,5 | 2,5 |
| Dichlorométhane | 170 | 165 |
| Xylène | 30 | 45 |

Ces compositions adhésives peuvent être conservées à la température ambiante avant utilisation pendant au moins une semaine sans que l'on puisse observer des réactions de gélification ou une variation de leur viscosité dynamique.

Exemple 35

Une composition adhésive est préparéee avec 100 g de copolyimide de l'exemple 17, 2,5 g de résine Epon 827, 0,5 g de résine Epon 1001, 2 g de résine époxyde TGAP, 250 g de dichlorométhane, 90 g de xylène et 30 g d'hexane.

**UTILISATION DES COMPOSITIONS ADHESIVES**

Exemples 36 à 45

Ces exemples montrent l'utilisation des compositions adhésives de l'invention pour fabriquer des matériaux composites flexibles constituées d'une feuille de cuivre, d'une couche adhésive et d'un film de polyimide Kapton assemblés par collage.

Une solution de la composition adhésive est déposée sur un film de polyimide Kapton de 125 micromètres d'épaisseur à l'aide d'un filmographe ayant une ouverture de 100 micromètres. Le film adhésif est séché à l'étuve pendant 1 à 2 minutes à 80°C. Le film de polyimide adhésive est ensuite collé sur une feuille de cuivre de 100 micromètres d'épaisseur par passage des deux substrats entre deux rouleaux chauffés à 160-170°C, avec une vitesse linéaire de 2 mètres par minute. La pression exercée par les rouleaux est de l'ordre de 1,5 à 2 MPa. Le matériau composite est recuit en étuve pendant 3 à 4 heures entre 160 et 170°C.

La force d'adhésion entre la feuille de cuivre et le film de Kapton est mesurée par pelage sur roue allemande avec un angle de traction de 90°.

La mesure du glissement des substrats l'un par rapport à l'autre est effectuée sur des échantillons de matériau composite préparés avec des éprouvettes de 10 cm de longueur et 2,3 cm de largeur ayant une surface de recouvrement de 5 cm sur 2,3 cm. Cet assemblage est placé dans une étuve programmée pour une montée en température de 1°C par minute. Il est fixé au sommet par une pince serrée sur le Kapton et un poids de 100 g ou de 300 g est attaché à la feuille de cuivre. La température de l'étuve est portée à 150°C et la valeur du glissement est donnée par le déplacement des deux substrats l'un par rapport à l'autre à la fin de ce traitement thermique.

La planéité de l'assemblage est déterminée en posant le matériau composite sur une surface parfaitement plane et en mesurant la flèche entre les bords et le centre du matériau.

L'aspect du joint de colle, c'est à dire son homogénéité, l'absence de bulles ou de défauts et l'importance du fluage de la résine est déterminé par examen visuel ou au microscope.

Les résultats obtenus avec les compositions adhésives des exemples 26 à 35 sont réunis dans le tableau 6.

Tableau 6

| Exemple n° | Composition de l'exemple n° | Résistance au pelage (daN/cm) |
|---|---|---|
| 36 | 26 | 1,8 |
| 37 | 27 | 1,7 |
| 38 | 28 | 1,9 |
| 39 | 29 | 1,8 |
| 40 | 30 | 1,7 |
| 41 | 31 | 2,2 |
| 42 | 32 | 2,0 |
| 43 | 33 | 2,4 |
| 44 | 34 | 2,2 |
| 45 | 35 | 1,9 |

Tous ces matériaux présentent un excellent aspect au niveau de la couche adhésive et une très bonne planéité avec une flèche inférieure à 0,5mm. Le glissement varie de 1 à 10 mm lorsque le co-réactif est une résine époxyde difonctionnelle (Epon 827). Il est de l'ordre de quelques micromètres avec les résines époxydes tri ou tétrafonctionnelles (TGAP et TGMDA).

Exemples 46 à 49 (comparatifs)

La fabrication des matériaux composites flexibles Kapton/cuivre est effectuée comme dans les exemples précédents en utilisant les compositions adhésives des exemples 22 à 25 préparées à partir des homopolymères décrits dans les exemples 1 à 4. Les résultats obtenus avec ces produits sont donnés dans le tableau 7.

Tableau 7

| Exemple n° | Composition de l'exemple n° | Résistance au pelage (daN/cm) |
|---|---|---|
| 46 | 22 | 1,3 |
| 47 | 23 | 0,7 |
| 48 | 24 | 0,5 |
| 49 | 25 | 0,2 |

Les compositions adhésives des exemples 23 à 25 donnent des collages plans et exempts de défaut mais le glissement est de 100%, c'est à dire que les deux substrats se détachent complètement lors de cet essai. Avec la composition de l'exemple 22, le glissement est de 3 mm mais le joint de colle n'est pas homogène avec de nombreuses bulles et des zones de fluage irrégulières. De plus, le matériau est fortement incurvé (mauvaise planéité). Le polyimide qui constitue la base de l'adhesif est trop rigide pour ce type d'application.

Exemples 50 et 51

La technique des exemples précédents est utilisée pour coller deux films de polyimides (Kapton de 50 micromètres d'épaisseur) entre eux avec les compositions adhésives des exemples 32 et 33. La résistance au pelage de ces assemblages est excellente car le film de polyimide se déchire avant qu'il y ait rupture au niveau du joint de colle.

Exemple 52

On fabrique un matériau composite flexible selon le procédé des exemples précédents en encollant sur les deux faces un film de Kapton de 100 micromètres d'épaisseur avec la composition adhésive de l'exemple 29. Ce film est ensuite laminé entre rouleaux avec deux feuilles d'aluminium de 100 micromètres d'épaisseur. La résistance au pelage du joint adhésif est de 2 daN/cm.

Exemple 53

On fabrique un matériau composite flexible en déposant sur du tissu de verre E 1581 la composition adhésive préparée dans l'exemple 30. Le tissu est ensuite laminé entre deux feuilles d'aluminium de 50 micromètres d'épaisseur comme dans l'exemple 52. La force d'adhésion est plus grande que la solidité de la feuille métallique qui se déchire au moment des essais de pelage.

Exemple 54

Un tissu de verre E 1581 est imprégné avec la composition adhésive de l'exemple 33 de façon a obtenir après évaporation du solvant un matériau préimprégné contenant 60% en poids de résine et 40% de tissu de verre. Ce matériau est découpé en feuilles carrées de 30 cm de cotés. On superpose 12 de ces feuilles et on les place entre les plateaux d'une presse hydraulique chauffés à 120°C. On applique une pression de 1,4 MPa et la température est portée à 170°C. Le traitement sous pression à cette température est de 3 heures. Le matériau composite est ensuite recuit dans une étuve à 200°C pendant 5 heures. Il a une porosité apparente inférieure à 2% et sa résistance à la rupture en flexion est de 60 kg/mm$^2$.

Exemple 55 (comparatif)

Les conditions expérimentales de l'exemple 54 sont utilisées pour préparer un matériau composite avec la composition adhésive de l'exemple 22. Le matériau obtenu a une porosité apparente supérieure à 15% et il présente de nombreuses zones boursouflées.

Exemple 56

Cet exemple est représentatif de l'utilisation des polymères de l'invention comme adhésifs supportés sur un tissu de verre E-235 pesant 90 g au mètre carré et traité avec un apprêt au 3-aminopropyl triéthoxysilane.

Une solution de copolyimide de l'exemple 5(10g),de résine époxyde DEN438 (1,2g) et d'époxystéarate d'octyle (0,9 g) dans un mélange de dichlorométhane (22 g), de xylène (3 g) et d'hexane (1 g) est utilisé pour enduire le tissu de verre tendu sur un cadre métallique. Le tissue enduit est séché à l'air dans une étuve à ventilation forcée pendant 15 à 20 minutes à 80-90°C. A la fin de l'opération, le poids de résine doit être au moins égal au poids de tissu de verre mais un excès de résine de 15 à 20% est encore préférable.

L'intercalaire adhésif est placé entre deux éprouvettes en alliage d'aluminium 2024 T3 avec une surface de recouvrement de 3 cm2. L'assemblage est soumis à une pression de 0,5 MPa, puis il est placé dans une étuve préchauffée à 120°C. Après une heure de traitement à cette température, celle-ci est portée à 200°C et l'assemblage est recuit pendant 5 heures. Après refroidissement à la température ambiante, la valeur de la contrainte à la rupture en traction-cissaillement est 20,4 MPa.

Exemples 57 à 60

On prépare une série de films adhésifs supportés sur tissu de verre comme indiqué dans l'exemple 56 pour coller des éprouvettes en alliage d'aluminium. Les valeurs de la contrainte à la rupture en traction-cisaillement sont données dans le tableau 8.

Tableau 8

| Exemple n° | Composition de l'exemple n° | Contrainte de rupture (MPa) |
|---|---|---|
| 57 | 26 | 20,5 |
| 58 | 28 | 20,2 |
| 59 | 31 | 21,2 |
| 60 | 33 | 22,3 |

## Revendications

1. - Composition adhésive caractérisée en ce qu'elle comprend
(a) au moins un copolyimide arylaliphatique à enchaînements éther résultant de la réaction d'au moins un composé aromatique de formule générale

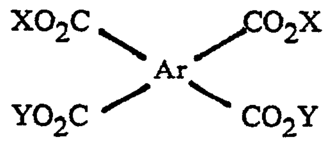

(3)

avec au moins une diamine primaire de formule

$$H_2N\text{-}R\text{-}NH_2 \quad (1)$$

et au moins une diamine primaire de formule

$$H_2N\text{-}R''_1\text{-}O\text{-}(\text{-}R'\text{-}O\text{-})_n\text{-}R''_2\text{-}NH_2 \quad (2)$$

la diamine de formule (1) représentant de 90 à 30 % en mole et la diamine de formule (2) de 10 à 70 % en mole de la quantité totale des diamines primaire ;
Ar étant un radical aromatique tétravalent formé d'un ou de plusieurs cycles et dont les quatre valences sont sur des atomes de carbone distincts situés deux par deux en position ortho l'un par rapport à l'autre ;
X et Y étant chacun un atome d'hydrogène ou un radical d'hydrocarbure;
R, R', $R''_1$, et $R''_2$ étant des radicaux organiques divalents dont les deux valances sont sur des atomes de carbone distincts dans la molécule, et
n étant zéro ou un nombre entier ; et
b) au moins une résine époxyde possédant plus d'un groupe époxyde par molécule.

2. - Composition selon la revendication 1, dans lesquels le composé (3) mis en jeu dans la préparation du copolyimide est l'acide ou un ester de l'acide benzhydrol tétracarboxylique.

3. - Composition selon la revendication 1, dans lesquels le composé (3) mis en jeu dans la préparation du copolyimide est l'acide ou un ester de l'acide benzophénone tétracarboxylique.

4. - Composition selon l'une des revendications 1 à 3, caractérisée en ce que la reaction de préparation du copolyimide est mise en oeuvre à une température de 80 à 400°C.

5. - Composition selon l'une des revendications 1 à 4, caractérisée en ce qu'elle renferme, pour 100 parties de copolyimide, de 1 à 30 parties en poids de résine époxyde.

6. - Composition selon l'une des revendications 1 à 5, dans laquelle le copolyimide a une viscosité inhérente de 0,2 à 0,8 dl/g, mesurée à 30° C pour une concentration de 5 g de polymère par litre de N-méthylpyrrolidone.

7. Méthode de collage de deux substrats entre eux, caractérisée en ce qu'elle consiste à disposer une composition selon l'une des revendications 1 à 6 entre les deux substrats et à chauffer le produit résultant à une température de 100 à 300 ° C, en maintenant le contact entre les deux substrats.

8. - Méthode selon la revendication 7, dans laquelle le chauffage est effectué à 100-200° C.

9. - Méthode selon l'une des revendications 7 et 8, caractérisée en ce que l'on colle un film de polymère sur une feuille métallique mince.

## Patentansprüche

1. Klebstoff, gekennzeichnet durch einen Gehalt an
a) mindestens einem arylaliphatischen Copolyimid mit Etherbrücken, das erhalten wurde aus der Umsetzung von mindestens einer aromatischen Verbindung der allgemeinen Formel

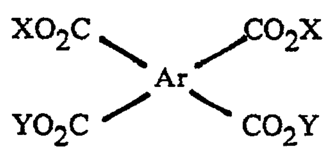

(3)

mit mindestens einem primären Diamin der Formel

$$H_2N\text{-}R\text{-}NH_2 \quad (1)$$

und mindestens einem primären Diamin der Formel

$$H_2N\text{-}R''_1\text{-}O\text{-}(\text{-}R'\text{-}O\text{-})_n\text{-}R''_2\text{-}NH_2 \quad (2)$$

wobei das Diamin der Formel (1) 90 bis 30 Mol.-% und das Diamin der Formel (2) 10 bis 70 Mol.-% der Gesamtmenge an primären Diaminen ausmacht;
Ar ein tetravalenter aromatischer Rest ist, der aus einem oder mehreren Ringen gebildet ist und dessen vier Valenzen sich an unterschiedlichen Kohlenstoffatomen jeweils zu zweit in ortho-Stellung im Verhältnis zueinander befinden;
X und Y jeweils ein Wasserstoffatom oder einen Kohlenwasserstoffrest bedeuten;
R, R', R"! und R"MV
b) mindestens einem Epoxydharz, das mehr als eine Epoxydgruppe pro Molekül besitzt.

2. Klebstoff nach Anspruch 1, bei dem die zur Herstellung des Copolyimids eingesetzte Verbindung (3) die Säure oder ein Ester der Benzhydrol-tetracarbonsäure ist.

3. Klebstoff nach Anspruch 1, bei dem die zur Herstellung des Copolyimids eingesetzte Verbindung (3) die Säure oder ein Ester der Benzophenon-tetracarbonsäure ist.

4. Klebstoff nach einem der Ansprüche 1 bis 3, dadurch gekennzeichnet, daß die Umsetzung zur Herstellung des Copolyimids bei einer Temperatur von 80 bis 400°C durchgeführt wird.

5. Klebstoff nach einem der Ansprüche 1 bis 4, dadurch gekennzeichnet, daß er pro 100 Teile Copolyimid 1 bis 30 Gewichtsteile Epoxydharz aufweist.

6. Klebstoff nach einem der Ansprüche 1 bis 5, bei dem das Copolyimid eine inherente Viskosität von 0,2 bis 0,8 dl/g, gemessen bei 30°C bei einer Konzentration von 5 g Polymer pro Liter N-Methylpyrrolidon, hat.

7. Verfahren zum Verkleben von zwei Substraten miteinander, dadurch gekennzeichnet, daß es darin besteht, einen Klebstoff nach einem der Ansprüche 1 bis 6 zwischen die beiden Substrate aufzubringen und das erhaltene Produkt bei einer Temperatur von 100 bis 300°C zu erhitzen unter Beibehaltung des Kontaktes zwischen den beiden Substraten.

8. Verfahren nach Anspruch 7, bei dem das Erhitzen bei 100 bis 200°C bewirkt wird.

9. Verfahren nach einem der Ansprüche 7 und 8, dadurch gekennzeichnet, daß man einen Polymerfilm auf eine dünne Metallfolie aufklebt.

## Claims

1. Adhesive composition characterized in that it comprises
a) at least an arylaliphatic copolyimide with ether chains resulting from the reaction of at least one aromatic compound of general formula

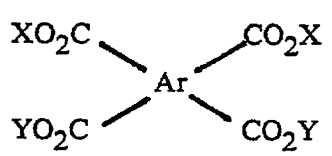

(3)

with at least one primary diamine of formula

$$H_2N\text{-}R\text{-}NH_2 \quad (1)$$

and at least one primary diamine of formula

$$H_2N\text{-}R''_1\text{-}O\text{-}(\text{-}R'\text{-}O\text{-})_n\text{-}R''_2\text{-}NH_2 \quad (2)$$

the diamine of formula (1) representing from 90 to 30% by mole and the diamine of formula (2) from 10 to 70% by mole of the total amount of primary diamines;
Ar being a tetravalent aromatic radical made of one or more rings and whose four valences are on separate carbon atoms located two by two in ortho position in relation to each other;
X and Y each being a hydrogen atom or a hydrocarbon radical;
R, R', R"
b) at least one epoxy resin possessing more than one opoxy group per molecule.

2. A composition according to claim 1, in which compound (3) used in the preparation of the copolyimide is benzhydrol tetracarboxylic acid or an ester thereof.

3. A composition according to claim 1, in which compound (3) used in the preparation of the copolyimide is benzophenone tetracarboxylic acid or an ester thereof.

4. A composition according to one of claims 1 to 3, characterized in that the preparation of the copolyimide is performed at a temperature of 80 to 400°C.

5. A composition according to one of claims 1 to 4 characterized in that it contains, for 100 parts of copolyimide, from 1 to 30 parts by weight of epoxy resin.

6. A composition according to one of claims 1 to 5, in which the copolyimide has an inherent viscosity of 0.2 to 0.8 dl/g, measured at 30°C for a concentration of 5 g of polymer per liter of N-methyl pyrrolidone.

7. A method of gluing two substrates to each other, characterized in that it consists in placing a composition according to one of claims 1 to 6 between the two substrates and in heating the resultant product to a temperature of 100 to 300°C, while maintaining the contact between the two substrates.

8. A method according to claim 7, in which the heating is performed at 100–200°C.

9. A method according to one of claims 7 and 8, characterized in that a polymer film is glued on a thin metal sheet.